# EUROPÄISCHE PATENTANMELDUNG

(11) **EP 4 699 876 A1**
(43) Veröffentlichungstag der Anmeldung: **25.02.2026**
(21) Anmeldenummer: 24196064.0
(22) Anmeldetag: 23.08.2024
(51) Int. Cl.: B60T 13/66

(54) **BREMSSYSTEM ZUM AUSFÜHREN EINER PARKBREMSFUNKTION EINES FAHRZEUGS SOWIE FAHRZEUG DAMIT UND VERFAHREN DAFÜR**

(71) Anmelder: ZF CV Systems Global GmbH, 3006 Bern (CH)
(72) Erfinder: VAN THIEL, Julian, 30938 Grossburgwedel (DE)
(74) Vertreter: Schäferjohann, Volker

(57) **Zusammenfassung**

Die Erfindung betrifft ein Bremssystem (10) zum Ausführen einer Parkbremsfunktion (82) eines Fahrzeugs (100) mit mehreren individuell ansteuerbaren, insbesondere elektromechanischen, Bremsaktuatoren (14), einer Überwachungsanordnung (30), die eingerichtet ist, mindestens einen ersten Zustand (38) und einen zweiten Zustand (40) des Fahrzeugs zu erfassen und einem Bremssteuergerät (20), das eingerichtet ist, ein Parkbremsanforderungssignal (26), das vorzugsweise eine Blockieranforderung (28a, 28b) mehrerer oder aller Räder (12) des Fahrzeugs (100) anzeigt, zu empfangen und nach dem Empfangen des Parkbremsanforderungssignals (26) im Fall eines mit der Überwachungsanordnung (30) erfassten ersten Zustands (38) jeden der Bremsaktuatoren jeweils mit einem für den jeweiligen Bremsaktuator (14) vorbestimmten Wert (48) als Sollbremskraftwert (22) anzusteuern und im Fall eines mit der Überwachungsanordnung (30) erfassten zweiten Zustands (40) wenigstens einen der Bremsaktuatoren (14) mit einem Sollbremskraftwert (22) anzusteuern, der einer Summe (72) aus dem für den einen Bremsaktuator (14) vorbestimmten Wert (48) und einem für den einen Bremsaktuator (14) bestimmten Kompensationswertanteil (70) entspricht.

Die Erfindung betrifft ferner ein Fahrzeug (100) mit einem Bremssystem (10) und ein Verfahren (200) zum Ausführen einer Parkbremsfunktion (82) eines Bremssystems (10).

## Beschreibung

Die Erfindung betrifft den Bereich der Bremsvorrichtungen für Fahrzeuge, insbesondere Nutzfahrzeuge, wie Lastkraftwagen, Sattelschlepper oder landwirtschaftliche Zugmaschinen.

Aus dem Stand der Technik sind Bremsanlagen von Fahrzeugen, wie Nutzfahrzeugen oder Personenkraftwagen, hinlänglich bekannt. Bremsanlagen eines Fahrzeugs umfassen üblicherweise pro Rad des Fahrzeugs einen Bremszylinder, der bei Betätigung, beispielsweise durch ein Bremspedals, einen oder mehrere mit einem Bremskolben verbundene Bremsbeläge an eine Bremsscheibe des jeweiligen Rads drückt, um eine Bremswirkung zu erzeugen.

Ein Bremszylinder einer Bremsanlage wird zum Bereitstellen einer Betriebsbremsfunktion mit einem Fluid betrieben, wobei mit dem Fluid ein Druck in einer Druckkammer des Bremszylinders erhöht oder verringert wird. Das Fluid ist beispielsweise ein Gas, nämlich Druckluft, oder eine Flüssigkeit, nämlich eine Bremsflüssigkeit oder eine Hydraulikflüssigkeit. Insbesondere bei Nutzfahrzeugen werden die Bremszylinder häufig durch Druckluft betrieben.

Bremsanlagen mit Druckluftbetrieb weisen in der Regel ein Druckluftreservoir in Form eines Druckluftbehälters auf, dessen Druck stetig über einen Kompressor gehalten wird. Abhängig von einem durch ein Bremspedal angezeigten Bremswunsch werden dann Betriebsbremsventile geschaltet. Durch das Schalten der Betriebsbremsventile wird mit der Druckluft aus dem Druckluftreservoir der Druck in den Druckkammern des Bremszylinders erhöht, gehalten oder verringert. Ein Bremskolben wird demnach durch Erhöhen des Drucks in eine erste Richtung verschoben. Hierbei überwindet der Bremskolben eine Gegenkraft durch eine Feder. Wird der Druck verringert, versetzt die Feder den Bremskolben in eine zur ersten Richtung entgegengesetzt zweite Richtung.

Eine Bremsanlage oder Bremsvorrichtung, die eine von einer Bremspedalstellung abhängige Kraft mit dem Bremsbelag auf die Bremsscheibe ausübt, wird als Betriebsbremse oder als Bremsanlage mit Betriebsbremsfunktion bezeichnet und dient dem Bremsen während einer normalen Fahrt des Fahrzeugs.

Weiter ist neben der Betriebsbremsfunktion auch eine Parkbremsfunktion nötig, um ein abgestelltes Fahrzeug auch an Steigungen sicher in seiner Position zu halten. Die Parkbremsfunktion einer Bremsanlage wird auch als Parkbremse oder Feststellbremse bezeichnet. Entsprechend kann die Parkbremsfunktion auch als Feststellbremsfunktion bezeichnet werden. Eine Realisierung der Feststellbremse bei den genannten Bremsanlagen, die mit einem Fluid betrieben werden, erfolgt ebenfalls durch die Feder. Wird das Gas vollständig aus dem Bremszylinder abgelassen, so wird durch die Feder der Bremskolben mit seinem Bremsbelag an die Bremsscheibe gedrückt. So kann insbesondere im Stillstand ohne einen Druck mit einem Kompressor zu halten, ein Fahrzeug sicher in seiner Position gehalten werden.

Zur Realisierung der Bremsfunktionen und insbesondere der Parkbremsfunktion halten zunehmend auch elektromechanische Bremsaktuatoren Einzug in Fahrzeugsysteme. Beispielsweise kann so ein Bremskolben eines Bremszylinders neben einer Betätigung oder einem Betrieb mit einem Fluid auch durch einen elektromechanischen Bremsaktuator betätigt werden, um die Feststellbremsfunktion bereitzustellen.

Ein Vorteil beim Einsatz eines elektromechanischen Bremsaktuators besteht beispielsweise darin, dass dieser gerade nicht abhängig von fluidischen Betriebsmitteln, wie beispielsweise Druckluft oder Bremsflüssigkeit, ist. Im Fall eines Druckabfalls bei einer druckluftbetriebenen Betriebsbremse kann somit auch eine Notbremsung durch den elektromechanischen Bremsaktuator erfolgen. Der zusätzliche Einsatz eines elektromechanischen Bremsaktuators zur Realisierung einer Feststellbremsfunktion schafft somit auch die Voraussetzung für ein Notbremssystem, das auch als Hilfsbremse bezeichnet wird.

Der kombinierte Einsatz einer Bremsanlage mit Druckluftbetrieb zur Realisierung der Betriebsbremse und elektromechanischen Bremsaktuatoren zur Realisierung einer Parkbremse erfordert jedoch eine hohe Präzession bei der Ansteuerung. Insbesondere sind gewünschte Positionen des elektromechanischen Bremsaktuators zum Verfahren eines Bremskolbens oder Bremszylinders sehr genau zu bestimmen. Die präzise Ansteuerung ist nötig, um einerseits keine zu hohe Kraft beim Andrücken eines Bremsbelags an eine Bremsscheibe, die zur Beschädigung führen könnte, und andererseits eine ausreichende Kraft zu erzeugen, so dass die gewünschte Bremswirkung eintritt. Weiterhin ist auch eine aktuelle Position des Bremskolbens eines Bremszylinders, der durch eine Betriebsbremse mittels Druckluft eingestellt wurde, zu berücksichtigen, wenn ein elektromechanischer Aktuator für eine Feststellbremse aktiviert wird.

Darüber hinaus sind auch Bremssysteme bekannt, bei denen vollständig auf eine Bremsfunktion mit Druckluftbetrieb zur Realisierung der Betriebsbremse verzichtet wird und der elektromechanische Bremsaktuator auch die Betriebsbremsfunktion übernimmt.

Unabhängig davon, ob ein Bremssystem in einem Fahrzeug verwendet wird, das Betriebs- und Parkbremse ausschließlich mit elektromechanischen Bremsaktuatoren realisiert oder einem Bremssystem, das die Betriebsbremse mit Druckluft und zusätzlich elektromechanische Bremsaktuatoren zur Realisierung einer Parkbremsfunktion oder einer Hilfsbremsfunktion aufweist, bestehen, wie bereits oben ausgeführt, hohe Anforderungen an die Ansteuerung von eingesetzten elektromechanischen Bremsaktuatoren. Insbesondere im Fall eines Abstellens eines Fahrzeugs müssen die elektromechanischen Bremsaktuatoren so eingestellt werden, dass diese eine bestimmte Sollbremskraft aufweisen. Es muss beispielsweise berücksichtigt werden, dass Bremsscheiben und Bremsbeläge abkühlen können und so die eingestellte Bremskraft während des Stillstands variieren kann. Hierzu muss eine Sollbremskraft entweder so hoch gewählt werden, dass trotz Abkühlung immer eine ausreichende Bremskraft zur Verfügung steht oder die elektromechanischen Bremsaktuatoren müssen nach einer gewissen Zeitdauer, die ein Fahrzeug steht, nachgestellt werden. Hierfür sind feste Sollbremskraftwerte vorgegeben, mit denen die Bremsaktuatoren während einer Situation, in der das Fahrzeug mit einer Parkbremse gehalten werden soll, angesteuert werden.

Diese Sollbremskraftwerte sind für das Fahrzeug häufig vorab, beispielsweise durch Berechnungen, so bestimmt, dass keine zu hohe Kraft vom Bremsbelag auf die Bremsscheibe wirkt, so dass diese nicht beschädigt wird, aber andererseits das Fahrzeug sicher gehalten wird. Üblicherweise wird bei der Bestimmung berücksichtigt, dass jedes der gebremsten Räder seinen Beitrag zum Halten des Fahrzeugs leistet.

Fällt nun einer der elektromechanischen Bremsaktuatoren aus, so besteht die Gefahr, dass die vorab berechnete Bremskraft der übrigen Aktuatoren zumindest in bestimmten Situationen nicht mehr ausreichend ist, um das Fahrzeug zu halten. Solche Situationen sind beispielsweise, wenn das Fahrzeug an einer Schräge, insbesondere mit starker Steigung, abgestellt wird, wobei die Gefahr einer solchen Situation noch dadurch verstärkt werden kann, wenn das Fahrzeug stark beladen ist.

Aufgabe der vorliegenden Erfindung ist es daher den Problemen des Standes zu begegnen. Insbesondere soll ein Bremssystem mit elektromechanischen Bremsaktuatoren gefunden werden, das ein Fahrzeug in jeder Situation sicher halten kann. Jedenfalls soll eine Alternative zum aus dem Stand der Technik Bekannten gefunden werden.

Erfindungsgemäß wird ein Bremssystem nach Anspruch 1 vorgeschlagen.

Demnach wird ein Bremssystem zum Ausführen einer Parkbremsfunktion eines Fahrzeugs vorgeschlagen. Bevorzugt ist das Fahrzeug ein Nutzfahrzeug. Das Bremssystem umfasst mehrere individuell ansteuerbare Bremsaktuatoren, die vorzugsweise elektromechanische Bremsaktuatoren sind. Jeder der Bremsaktuatoren ist jeweils mindestens einem Rad des Fahrzeugs zugeordnet und eingerichtet, eine Bremskraft zum Bremsen des zugeordneten Rades in Abhängigkeit von einem dem Bremsaktuator zugeordneten Sollbremskraftwert zu erzeugen.

Ferner umfasst das Bremssystem eine Überwachungsanordnung. Die Überwachungsanordnung ist eingerichtet, um mindestens einen ersten Zustand und einen zweiten Zustand des Fahrzeugs zu erfassen.

Außerdem umfasst das Bremssystem ein Bremssteuergerät, das eingerichtet ist, ein Parkbremsanforderungssignal zu empfangen. Vorzugsweise umfasst das Parkbremsanforderungssignal eine Blockieranforderung mehrerer oder aller Räder des Fahrzeugs. Eine Blockieranforderung entsprich beispielsweise einer Anforderung, vorzugsweise ausgelöst durch einen Fahrer, das Fahrzeug im Stillstand zu halten, indem Bremsaktuatoren, vorzugsweise an mehreren oder allen Rädern des Fahrzeugs, die zur Umsetzung einer Feststellbremsfunktion vorgesehen sind, entsprechend angesteuert werden, so dass das Fahrzeug im Stillstand gehalten wird. Verzugsweise wird demnach mit dem Parkbremsanforderungssignal ein Blockieren mehrerer oder aller Räder zum Halten des Fahrzeugs im Stillstand angefordert. Vorzugsweise ist die Überwachungsanordnung Bestandteil des Bremssteuergeräts. Die Überwachungsanordnung kann aber auch gemäß einer Alternative einem weiteren Steuergerät zugeordnet sein, wobei das Bremssystem dann eingerichtet ist, den erfassten ersten Zustand oder den erfassten zweiten Zustand an das Bremssteuergerät zu übertragen.

Das Bremssteuergerät ist ferner eingerichtet, um nach dem Empfangen des Bremsanforderungssignals in Abhängigkeit vom erfassten ersten Zustand oder erfassten zweiten Zustand die Bremsaktuatoren unterschiedlich anzusteuern. Im Fall, dass mit der Überwachungsanordnung der erste Zustand des Fahrzeugs erfasst wird, wird jeder der Bremsaktuatoren jeweils mit einem für den jeweiligen Bremsaktuator vorbestimmten Wert als Sollbremskraftwert angesteuert. Wird mit der Überwachungsanordnung der zweite Zustand erfasst, wird wenigstens einer der Bremsaktuatoren mit einem Sollbremskraftwert angesteuert, der einer Summe aus dem für den Bremsaktuator vorbestimmten Wert und einem für den Bremsaktuator bestimmten Kompensationswertanteil entspricht.

Vorzugsweise sind oder werden demnach für jeden der Bremsaktuatoren Werte für eine Parkbremsfunktion vorbestimmt, die beispielsweise in einer Datenbank hinterlegt sind. Im Fall des ersten Zustands ist das Bremssteuergerät eingerichtet, den Sollbremskraftwert jedes Bremsaktuators mit dem jeweiligen für den Bremsaktuator vorbestimmten Wert anzusteuern. Es wird demnach eine vorbestimmte Bremskraft eingestellt. Wird der zweite Zustand erkannt, können ebenfalls mehrere der Bremsaktuatoren mit dem vorbestimmten Wert als Sollbremskraftwert angesteuert werden, wobei jedoch wenigstens einer der Bremsaktuatoren mit einem Sollbremskraftwert angesteuert wird, der der Summe aus dem vorbestimmten Wert und dem Kompensationswertanteil entspricht. Entsprechend wird also mindestens einer der Bremsaktuatoren mit einem höheren Sollbremskraftwert angesteuert, als es durch den vorbestimmten Wert für den jeweiligen Bremsaktuator vorgegeben ist. Der Kompensationswertanteil entspricht demnach einem positiven Wert.

Demnach ist das Bremssystem eingerichtet, den Zustand des Fahrzeugs beim Ausführen einer Parkbremsfunktion zu überwachen und in Abhängigkeit vom Zustand, wenn dieser dem ersten Zustand entspricht, den Bremsaktuatoren ihren vorbestimmten Wert als Sollbremskraftwert zuzuführen, um eine entsprechende Bremskraft, die vorbestimmt ist, zu erzeugen. Dieser Zustand kann beispielsweise ein normaler Zustand des Fahrzeugs sein. Sind alle definierten Bedingungen für einen normalen Zustand beim Abstellen eines Fahrzeugs und dem Aktivieren einer Parkbremsfunktion demnach beispielsweise erfüllt, kann vom ersten Zustand ausgegangen werden. Weicht der Zustand des Fahrzeugs vom normalen Zustand, für den beispielsweise die Werte der Bremsaktuatoren vorbestimmt sind, ab, wird dies als zweiter Zustand des Fahrzeugs erfasst und wenigstens einer der Bremsaktuatoren wird derart angesteuert, dass dieser eine höhere Bremskraft erzeugt, so dass trotz veränderter Bedingungen ein sicheres Halten des Fahrzeugs ermöglicht wird.

Es werden somit die Bremsaktuatoren eines Fahrzeugs in Abhängigkeit von einem Zustand des Fahrzeugs nach dem Empfang des Parkbremsanforderungssignals angesteuert. Der Erfindung liegt hierbei die Erkenntnis zugrunde, dass eine individuelle Ansteuerung der Bremsaktuatoren für ein sicheres Halten des Fahrzeugs unter unterschiedlichen Bedingungen genutzt werden kann, wobei zur Bestimmung der Bedingungen zur Ansteuerung ein Zustand des Fahrzeugs, der auch Fahrzeugzustand genannt werden kann, erfasst werden muss.

Gemäß einer ersten Ausführungsform ist die Überwachungsanordnung eingerichtet, eine Funktion jedes oder mehrerer der Bremsaktuatoren zu überwachen und eine fehlerfreie Funktion oder eine fehlerbehaftete Funktion jedes der mehreren Bremsaktuatoren zu erfassen. Die Überwachungsanordnung ist eingerichtet, den ersten Zustand bei einer erfassten fehlerfreien Funktion jedes oder aller der mehreren überwachten Bremsaktuatoren zu erfassen. Außerdem ist die Überwachungsanordnung eingerichtet, den zweiten Zustand bei einer erfassten fehlerbehafteten Funktion mindestens eines der überwachten Bremsaktuatoren zu erfassen.

Die Überwachungsanordnung überwacht und prüft somit, ob jeder oder mehrere der mehreren Bremsaktuatoren eine fehlerfreie Funktion oder eine fehlerbehaftete Funktion aufweisen. Hierzu kann beispielsweise eine Sensorik an den Bremsaktuatoren, insbesondere an zu überwachenden der mehreren Bremsaktuatoren, angeordnet sein. Eine fehlerbehaftete Funktion eines Bremsaktuators kann von der Überwachungsanordnung oder dem Bremssteuergerät mit der Überwachungsanordnung auch beispielsweise dann erkannt werden, wenn der jeweilige Bremsaktuator den Fehler selber meldet oder der jeweilige Bremsaktuator auf eine Ansteuerung keine Rückmeldung oder eine fehlerhafte Rückmeldung in Form von Daten gibt.

Sind alle Bremsaktuatoren als funktionierend erkannt, werden die Bremsaktuatoren mit dem vorbestimmten Wert als Sollbremskraftwert angesteuert. Wird wenigstens einer der Bremsaktuatoren als fehlerbehaftet, also einen Fehler aufweisend, erkannt, so wird der zweite Zustand erfasst und entsprechend davon ausgegangen, dass der Bremsaktuator seine ihm über seinen vorbestimmten Wert als Sollbremskraftwert zugeordnete Bremskraft nicht erreichen kann. In diesem Fall wird wenigstens ein weiterer der Bremsaktuatoren mit der Summe aus dem für ihn vorbestimmten Wert und dem Kompensationswertanteil angesteuert, um so eine erhöhte Bremskraft auszuüben und entsprechend den fehlerhaften oder ausgefallenen Bremsaktuator zu ersetzen.

Ein sicheres Halten eines Fahrzeugs auch bei einem fehlerbehafteten, beispielsweise ausgefallenen, Bremsaktuator wird so ermöglicht.

Gemäß einer weiteren Ausführungsform ist das Bremssteuergerät im Fall eines erfassten zweiten Zustands eingerichtet, zunächst einen Kompensationsbremskraftwert zu bestimmen. Der Kompensationsbremskraftwert wird in Abhängigkeit von dem vordefinierten Wert des fehlerbehafteten der mehreren Bremsaktuatoren oder in Abhängigkeit von der Summe der vordefinierten Werte jedes der fehlerbehafteten der mehreren Bremsaktuatoren bestimmt. Ein fehlerbehafteter Bremsaktuator entspricht einem Bremsaktuator mit fehlerbehafteter Funktion und ein fehlerfreier Bremsaktuator entspricht einem Bremsaktuator mit fehlerfreier Funktion. Im Fall, dass also ein Bremsaktuator als fehlerbehafteter Bremsaktuator erkannt wird, wird der vordefinierte Wert für diesen Bremsaktuator als Kompensationsbremskraftwert bereitgestellt oder es wird ein Kompensationsbremskraftwert in Abhängigkeit von dem vordefinierten Wert für diesen Bremsaktuator bestimmt. Im Fall von zwei oder mehreren Bremsaktuatoren, die als fehlerbehaftet erkannt werden, wird eine Summe gebildet, die der Summe der vordefinierten Werte der fehlerbehafteten Bremsaktuatoren entspricht. Diese Summe entspricht dann dem Kompensationsbremskraftwert oder es wird ein Kompensationsbremskraftwert in Abhängigkeit von dieser Summe bestimmt.

Für jeden der Bremsaktuatoren, der nicht als fehlerbehaftet erkannt wurde, vorzugsweise für jeden fehlerfreien Bremsaktuatoren, wird jeweils ein Kompensationsbremskraftwertanteil in Abhängigkeit vom Kompensationsbremskraftwert bestimmt. Vorzugsweise entspricht die Summe der Kompensationsbremskraftwertanteile dem Kompensationsbremskraftwert. Jeder der fehlerfreien Bremsaktuatoren wird dann mit einem Sollbremskraftwert angesteuert, der einer Summe aus dem für den Bremsaktuator vordefinierten Wert und dem für den jeweiligen Bremsaktuator bestimmten Kompensationswertanteil entspricht. Besonders bevorzugt werden die Kompensationswertanteile gleich groß bestimmt.

Je nach Art des Ausfalls, also je nachdem, wie viele Bremsaktuatoren ausgefallen sind, wird also die Bremskraft der funktionierenden, also fehlerfreien, Bremsaktuatoren erhöht. Ein sicherer Halt des Fahrzeugs bleibt somit auch beim Ausfall mehrerer Bremsaktuatoren erhalten, wobei hingegen die Bremskraft nur so weit erhöht wird, wie es nötig ist, um das Fahrzeug sicher zu halten. Ein sicherer Halt bei gleichzeitiger Berücksichtigung eines entsprechend minimierten Verschleißes wird so ermöglicht.

Gemäß einer weiteren Ausführungsform umfasst die Überwachungsanordnung für mehrere oder jeden der Bremsaktuatoren jeweils einen Sensor. Der Sensor ist eingerichtet, eine fehlerfreie oder fehlerbehaftete Funktion des dem Sensor zugeordneten Bremsaktuators zu erfassen. Der Sensor ist beispielsweise ein Kraftsensor, ein Drucksensor, ein Wegesensor oder ein Sensor zum Bestimmen eines Drehmoments, also ein Momentensensor. Alternativ oder zusätzlich wird wenigstens eine elektrische Größe zum Ansteuern des jeweiligen Bremsaktuators überwacht, um in Abhängigkeit von einem Verlauf der elektrischen Größe eine fehlerfreie oder eine fehlerbehaftete Funktion des dem Verlauf zugeordneten Bremsaktuators zu erfassen. Hierbei kann die elektrische Größe beispielsweise eine Spannung, ein Strom oder beides umfassen.

Eine geeignete Möglichkeit zum Überwachen der Funktion eines Bremsaktuators ist so geschaffen.

Gemäß einer weiteren Ausführungsform umfasst das Bremsanforderungssignal eine temporäre oder eine andauernde Blockieranforderung. Im Fall, dass das Parkbremsanforderungssignal einer temporären Blockieranforderung entspricht, erfasst die Überwachungsanordnung den ersten Zustand. Im Fall, dass das Parkbremsanforderungssignal eine andauernde Blockieranforderung umfasst, erfasst die Überwachungsanordnung den zweiten Zustand.

Eine temporäre Blockieranforderung kann beispielsweise einer Blockieranforderung beim Warten an einer Ampel entsprechen, wobei einer andauernden Blockieranforderung dem Abstellen, also Parken, eines Fahrzeugs entsprechen kann. Die Unterscheidung zwischen temporärer Blockieranforderung und andauernder Blockieranforderung kann beispielsweise durch Eingabe eines Fahrers in ein Bedienelement erfolgen. Alternativ oder zusätzlich kann auch eine Unterscheidung zwischen temporärer Blockieranforderung und andauernder Blockieranforderung automatisch erfolgen, indem beispielsweise ein Parkbremsanforderungssignal vom Fahrzeug automatisch als temporäre Blockieranforderung interpretiert wird, solange ein Gangwahlhebel in Fahrposition ist und/oder der Motor läuft. Automatisch kann demgegenüber ein Parkbremsanforderungssignal als andauernde Blockieranforderung automatisch interpretiert werden, wenn kein Gang eingelegt, ein Gangwahlhebel auf Parkposition gestellt und/oder ein Motor abgestellt wird.

Im Fall eines mit der Überwachungsanordnung erfassten zweiten Zustands werden vorzugsweise mehrere oder alle der mehreren Bremsaktuatoren jeweils mit einem Sollbremskraftwert angesteuert, der einer Summe aus dem für den jeweiligen Bremsaktuator vorbestimmten Wert und einem für den jeweiligen Bremsaktuator bestimmten Kompensationswertanteil entspricht.

Somit wird, beispielsweise wenn ein Fahrzeug nur kurzzeitig, beispielsweise an einer Ampel, hält, das temporäre Blockieranforderungssignal, also ein Parkbremsanforderungssignal mit temporärer Blockieranforderung, erzeugt, so dass die Bremsaktuatoren jeweils mit ihrem vorbestimmten Wert angesteuert werden. Hier ist davon auszugehen, dass kein abkühlen der Bremsen während des Stillstehens erfolgt, so dass auch ein Nachspannen oder ein überhöhtes Zuspannen der Bremsen nicht erforderlich ist. Wird demgegenüber aber das Fahrzeug für einen längeren Zeitraum abgestellt, wird also die andauernde Blockieranforderung als Parkbremsanforderungssignal empfangen, so werden die Bremsaktuatoren jeweils mit einem gegenüber ihrem vorbestimmten Wert erhöhten Wert angesteuert, um eine entsprechend erhöhte Bremskraft zu erzeugen. In diesem Fall wird vorzugsweise ein Abkühlen der Bremsen während des Haltens des Fahrzeugs angenommen, so dass eine entsprechend höhere Bremskraft ausgeübt wird, um auch nach dem Abkühlen eine ausreichende Bremskraft zum Halten des Fahrzeugs zur Verfügung zu haben.

Vorzugsweise dienen die Überwachungseinrichtung und das Bremssteuergerät so, um in unterschiedlichen Situationen, in denen eine Parkbremse zum Blockieren der Räder gewünscht ist, unterschiedliche Bremskräfte mit den Bremsaktuatoren auszuüben.

Gemäß einer weiteren Ausführungsform werden die vorbestimmten Werte für die mehreren Bremsaktuatoren jeweils durch Abrufen aus einem Speicher, beispielsweise einem Speicher des Bremssteuergeräts, vorbestimmt, in dem der jeweilige Wert vordefiniert ist. Alternativ werden die vorbestimmten Werte für die mehreren Bremsaktuatoren jeweils in Abhängigkeit von einem Verschleiß des jeweiligen Bremsaktuators, einer Alterung des jeweiligen Bremsaktuators, einem Fahrzeugzustand oder einer Umweltbedingung des Fahrzeugs vorbestimmt und vorzugsweise nach regelmäßiger neuer Vorbestimmung im Speicher abgelegt.

Besonders bevorzugt erfolgt das Vorbestimmen der Werte der mehreren Bremsaktuatoren jeweils durch Abrufen eines für den Bremsaktuator vordefinierten Werts aus dem Speicher und Anpassen dieses Werts in Abhängigkeit von mindestens einem von einem Verschleiß des jeweiligen Bremsaktuators, einer Alterung des jeweiligen Bremsaktuators, einem Fahrzeugzustand oder einer Umweltbedingung des Fahrzeugs.

Eine Umweltbedingung umfasst beispielsweise eine Umgebungstemperatur. Ein Fahrzeugzustand entspricht oder umfasst beispielsweise einem Fahrzeuggewicht, wie beispielsweise einem Fahrzeuggesamtgewicht, oder einem Gesamtgewicht eines Gespanns aus dem Fahrzeug und einem Fahrzeuganhänger. Ein Verschleiß des jeweiligen Bremsaktuators entspricht beispielsweise einem Verschleiß der Bremsbeläge. Ein Gefälle oder ein Gelände kann entweder als Umweltbedingung oder als Fahrzeugzustand berücksichtigt werden. Ein Verschleiß des jeweiligen Bremsaktuators kann auch einem Verschleißzustand oder einem Alterungszustand des Bremsaktuators selbst entsprechen, der beispielsweise aus einem mechanischen Lastmonitoring des jeweiligen Sensors bestimmbar ist.

Gemäß einer weiteren Ausführungsform ist das Bremssteuergerät eingerichtet, den Kompensationswertanteil für einen oder mehrere der mehreren Bremsaktuatoren in Abhängigkeit von einem Verschleiß des Bremsaktuators, einer Alterung des Bremsaktuators, einem Fahrzeugzustand oder einer Umweltbedingung des Fahrzeugs zu bestimmen. Der Kompensationswertanteil ist demnach ebenfalls abhängig von den genannten Faktoren.

Zusätzlich oder alternativ ist ein Verhältnis der Kompensationswertanteile zueinander in Abhängigkeit von einem Verschleiß jedes oder mehrerer der mehreren Bremsaktuatoren, eine Alterung jedes oder mehrerer der mehreren Bremsaktuatoren, einem Fahrzeugzustand oder einer Umweltbedingung des Fahrzeugs zu bestimmen. Entsprechend können also Kompensationswertanteile für unterschiedliche Bremsaktuatoren auch unterschiedlich groß oder hoch sein, so dass beispielsweise stärker verschlissene Bremsaktuatoren einen vergleichsweise geringeren Kompensationswertanteil erhalten als noch nicht so stark verschlissene Bremsaktuatoren. Eine gleichmäßige Abnutzung der Bremsaktuatoren wird somit erreicht.

Gemäß einer weiteren Ausführungsform ist das Bremssteuergerät eingerichtet, einen Verschleiß, eine Alterung oder beides jedes oder mehrerer der mehreren Bremsaktuatoren zu bestimmen. Hierbei wird ein Verschleiß oder eine Alterung vorzugsweise durch eine Überwachung der Betätigung des jeweiligen Bremsaktuators ausgeführt. Es wird demnach vorzugsweise für jeden der Bremsaktuatoren aufgezeichnet, mit welcher Bremskraft und wie häufig ein Bremsaktuator eingesetzt wird. Hierdurch kann ein Verschleiß oder eine Alterung auch ohne zusätzliche Sensorik zumindest geschätzt werden.

Gemäß einer weiteren Ausführungsform umfasst das Bremssystem eine Anzeige. Im Fall eines mit der Überwachungsanordnung erfassten zweiten Zustands ist das Bremssystem eingerichtet, den zweiten Zustand mit der Anzeige für einen Fahrer auszugeben. Beispielsweise im Fall einer fehlerbehafteten Funktion wenigstens eines der Bremsaktuatoren wird somit eine Anzeige des Fehlers für den Fahrer bereitgestellt und der Fahrer auf diesen Fehler hingewiesen, um beispielsweise schnellstmöglich den Fehler zu beheben oder beheben zu lassen.

Gemäß einer weiteren Ausführungsform ist das Bremssteuergerät eingerichtet, nach dem Empfang des Parkbremsanforderungssignals im Fall eines mit der Überwachungsanordnung erfassten zweiten Zustands eine Liftachse des Fahrzeugs anzusteuern, um die Liftachse abzusenken. Ferner ist das Bremssteuergerät eingerichtet, nach dem Empfang des Parkbremsanforderungssignals mindestens einen Bremsaktuator mindestens eines der Räder der Liftachse mit einem Sollbremskraftwert anzusteuern. Hierbei wird der Bremsaktuator der Liftachse vorzugsweise mit einem Sollbremskraftwert angesteuert, der einer Summe aus dem für den Bremsaktuator der Liftwachse vorbestimmten Wert und einem für den Bremsaktuator der Liftachse bestimmten Kompensationswertanteil entspricht. Gemäß einer bevorzugten Ausgestaltung der Ausführungsform wird der Bremsaktuator der Liftachse ausschließlich mit dem Kompensationswert als Sollbremskraftwert oder einem Kompensationswertanteil als Sollbremskraftwert angesteuert, wobei besonders bevorzugt die übrigen Bremsaktuatoren, insbesondere abgesehen vom fehlerbehafteten Bremsaktuator, jeweils mit ihrem vorbestimmten Wert als Sollbremskraftwert angesteuert werden.

Insbesondere im Fall eines fehlerbehafteten Bremsaktuators, durch den ein zweiter Zustand erkannt wird, wird somit zusätzlich die Liftachse, auch wenn diese nicht abgesenkt ist, abgesenkt und verwendet, um eine zusätzliche Bremskraft zur Kompensation des fehlerbehafteten, insbesondere ausgefallenen, Bremsaktuators bereitzustellen.

Gemäß einer weiteren Ausführungsform ist das Bremssteuergerät eingerichtet, minimale Sollbremskraftwerte nach dem Empfangen des Parkbremsanforderungssignals zu ermitteln. Dies erfolgt durch Ansteuern mehrerer oder aller der Bremsaktuatoren jeweils mit dem im Bremssteuergerät bestimmten, also vorzugsweise den vorbestimmten Sollbremskraftwerten. Das Bremssystem ist also eingerichtet, jeden Bremsaktuator mit einem Sollbremskraftwert anzusteuern. Ferner ist das Bremssteuergerät derart eingerichtet, dass es nach dem Ansteuern mehrere oder alle Sollbremskraftwerte reduziert, bis eine Fahrzeugbewegung vom Bremssteuergerät detektiert wird. Eine Fahrzeugbewegung lässt sich beispielsweise durch Raddrehzahlsensoren des Fahrzeugs detektieren. Außerdem ist das Bremssteuergerät eingerichtet, um nachdem eine Fahrzeugbewegung detektiert wurde, alle Sollbremskraftwerte um einen Sicherheitswert, der beispielsweise vorgegeben ist, zu erhöhen. Die um den Sicherheitswert erhöhten Sollbremskraftwerte entsprechen dem minimalen Sollbremskraftwert.

Diese Schritte, die vom Bremssteuergerät ausführbar sind, können entweder bei einem erkannten ersten Zustand oder auch bei einem erkannten zweiten Zustand ausgeführt werden, wobei beim ersten Ansteuern mehrerer oder aller Bremsaktuatoren vor dem Reduzieren der Bremsaktuatoren jeder Bremsaktuator vorzugsweise mit dem vorbestimmten Wert oder mit dem vorbestimmten Wert zuzüglich dem Kompensationswertanteil angesteuert wird.

Ferner ist das Bremssystem vorzugsweise dazu ausgebildet, den minimalen Sollbremskraftwert zu prüfen. Hierzu ist das Bremssteuergerät eingerichtet, das Fahrzeug temporär anzutreiben und zu prüfen, ob eine Fahrzeugbewegung aus dem Antreiben resultiert. Die Schritte, die das Bremssteuergerät hier ausführt, können auch als Verfahrensschritte gemäß einem Ausführungsbeispiel des erfindungsgemäßen Verfahrens ausgeführt werden. Durch Bestimmen der minimalen Sollbremskraftwerte wird geprüft, ob die ermittelten Sollbremskraftwerte zum sicheren Halten des Fahrzeugs ausreichend sind und werden gegebenenfalls sogar reduziert, um einen Verschleiß auf die Bremsen zu reduzieren.

Gemäß einer weiteren Ausführungsform ist das Bremssteuergerät eingerichtet, nach dem Ansteuern der Bremsaktuatoren mit dem jeweiligen Sollbremskraftwert oder minimalen Sollbremskraftwert alle Bremsaktuatoren mechanisch zu sperren, um eine Bewegung des jeweiligen Bremsaktuators zu verhindern. Demnach umfasst das Bremssystem für einen oder mehrere Bremsaktuatoren einen Sperr- oder Verriegelungsmechanismus, der dafür sorgt, dass der jeweilige Bremsaktuator sich nicht im energielosen Zustand bewegt und so beispielsweise eine Bremskraft reduziert.

Ferner betrifft die Erfindung ein Fahrzeug mit einem Bremssystem nach einer der vorgenannten Ausführungsformen. Das Fahrzeug umfasst besonders bevorzugt einen Hebel oder Schalter zum Aktivieren und Deaktivieren einer Parkbremsfunktion. Vorzugsweise wird im Fall einer aktivierten Parkbremsfunktion, also nach dem Betätigen des Hebels oder Schalters zum Aktivieren einer Parkbremse, ein Parkbremsanforderungssignal erzeugt und an ein Bremssteuergerät vom Hebel oder Schalter gesendet.

Außerdem betrifft die Erfindung ein Verfahren zum Ausführen einer Parkbremsfunktion eines Bremssystems gemäß einer Ausführungsform oder zum Betreiben eines Fahrzeugs gemäß der Erfindung.

Gemäß einer Ausführungsform umfasst das Verfahren das Empfangen eines Parkbremsanforderungssignals mit einem Bremssteuergerät des Bremssystems. Außerdem wird ein Zustand des Fahrzeugs mit einer Überwachungsanordnung erfasst und Bremsaktuatoren des Fahrzeugs mit Sollbremskraftwerten in Abhängigkeit vom erfassten Zustand des Fahrzeugs angesteuert.

Weitere Ausführungsformen ergeben sich anhand der in den Figuren näher erläuterten Ausführungsbeispiele. Hierbei zeigen:
- Fig. 1: ein Fahrzeug gemäß einem Ausführungsbeispiel und
- Fig. 2: die Schritte eines Verfahrens gemäß einem Ausführungsbeispiel.

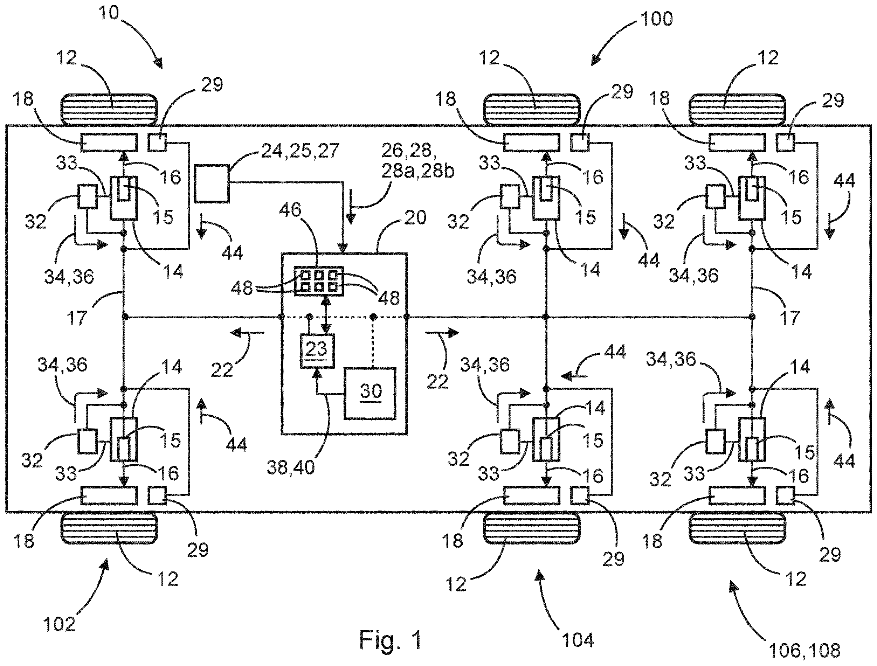

Fig. 1 zeigt ein Fahrzeug 100 mit einem Bremssystem 10 zum Ausführen einer Parkbremsfunktion 82 des Fahrzeugs 100. Das Fahrzeug 100 umfasst drei Achsen, 102, 104, 106, wobei die Achse 106 einer Liftachse 108 entspricht. Das Fahrzeug 100 umfasst an jedem seiner Räder 12 einen Bremsaktuator 14. Die Bremsaktuatoren 14 sind jeweils eingerichtet, eine mechanische Bewegung auszuführen, um so eine Bremskraft 16 auf eine exemplarisch dargestellte Bremseinrichtung 18 auszuüben. Jeder der Bremsaktuatoren 14 weist beispielsweise ein Schnittstellenmodul 15 auf, das neben dem mechanischen Teil, der ausgebildet ist, um die Bremskraft 16 zu erzeugen, eine Kommunikation über einen Datenbus 17 mit einem Bremssteuergerät 20 ermöglicht. Die Bremseinrichtung 18 umfasst vorzugsweise eine nicht in Fig. 1 im Detail dargestellte Kombination einer Bremsscheibe und einem Bremsbelag, wobei durch die Bremskraft 16 der Bremsbelag gegen die Bremsscheibe gedrückt wird.

Ferner ist in Fig. 1 das Bremssteuergerät 20 dargestellt, das mit jedem der Bremsaktuatoren 14 über den Datenbus 17 verbunden ist, um jeden der Bremsaktuatoren 14 jeweils individuell mit einem Sollbremskraftwert 22 anzusteuern. In Abhängigkeit vom Sollbremskraftwert 22, der einem Bremsaktuator 14 vom Bremssteuergerät 20 vorgegeben wird, wird die Bremskraft 16 eingestellt. Ferner weist das Fahrzeug 100 ein Bedienelement 24 auf. Das Bedienelement 24 ist vorzugsweise ein Hebel 25 oder ein Schalter 27. Das Bedienelement 24 ist von einem Fahrer des Fahrzeugs 100 bedienbar und dient dazu, in Abhängigkeit von einer Eingabe in das Bedienelement 24 ein Parkbremsanforderungssignal 26 an das Bremssteuergerät 20 zu übertragen. Das Parkbremsanforderungssignal 26 entspricht vorzugsweise einer Blockieranforderung 28. Die Blockieranforderung 28 entspricht vorzugsweise einer temporären Blockieranforderung 28a oder einer andauernden Blockieranforderung 28b. Die Blockieranforderung 28 entspricht einer Forderung durch einen Fahrer, dass mehrere oder alle Räder 12 des Fahrzeugs 100 vollständig feststehen sollen, also jedes oder mehrere der Räder 12 so mit den Bremsaktuatoren 14 gehalten werden sollen, dass eine Drehbewegung der Räder 12 vollständig verhindert wird.

Ferner umfasst das Fahrzeug 100 eine Überwachungsanordnung 30, die Bestandteil des Bremssteuergeräts 20 ist. Die Überwachungsanordnung 30 ist mit Sensoren 32 an jedem der Bremsaktuatoren 14 verbunden, um zu prüfen, ob jeder Sensor 32 jeweils eine fehlerfreie Funktion 34 oder eine fehlerbehaftete Funktion 36 aufweist. Die Überwachungsanordnung 30 erfasst somit für jeden der Bremsaktuatoren 14, ob dieser fehlerfrei arbeitet oder einen Fehler aufweist. Dies erfolgt beispielsweise durch Erfassen einer elektrischen Größe 33 des jeweiligen Bremsaktuators 14. Entsprechend wird der Überwachungsanordnung 30 eine fehlerfreie Funktion 34 oder eine fehlerbehaftete Funktion 36 jedes der Sensoren 32 mitgeteilt. In Abhängigkeit von den Sensorsignalen wird dann von der Überwachungsanordnung 30 bestimmt, ob sich das Fahrzeug 100 in einem ersten Zustand 38 oder einem zweiten Zustand 40 befindet. Der erste Zustand 38 entspricht einem Zustand, bei dem alle Bremsaktuatoren 14 eine fehlerfreie Funktion 34 aufweisen. Der zweite Zustand 40 entspricht einem Zustand des Fahrzeugs 100, bei dem wenigstens einer der Bremsaktuatoren 14 eine fehlerbehaftete Funktion 36 aufweist. In Abhängigkeit vom erfassten Zustand 38, 40 mit der Überwachungsanordnung 30 wird dann mit dem Bremssteuergerät 20, insbesondere einer Steuerlogik 23, der Sollbremskraftwert 22 für jeden der Bremsaktuatoren 14 bestimmt und die Bremsaktuatoren 14 jeweils mit ihrem Sollbremskraftwert 22 angesteuert.

Außerdem ist jedem der Räder 12 ein Raddrehzahlsensor 29 zugeordnet, der mit dem Datenbus 17 verbunden ist und über diese Datenverbindung eine Raddrehzahl 44 an das Bremssteuergerät 20 und/oder die Überwachungsanordnung 30 sendet. Vorzugsweise umfasst das Bremssteuergerät 20 noch eine Speicher 46, in dem vorbestimmte Werte 48 für jeden der Bremsaktuatoren 14 jeweils hinterlegt sind, die beispielsweise beim Empfang eines Bremsanforderungssignals als Sollbremskraftwerte 22 für den jeweiligen Bremsaktuator 14 verwendet werden sollen.

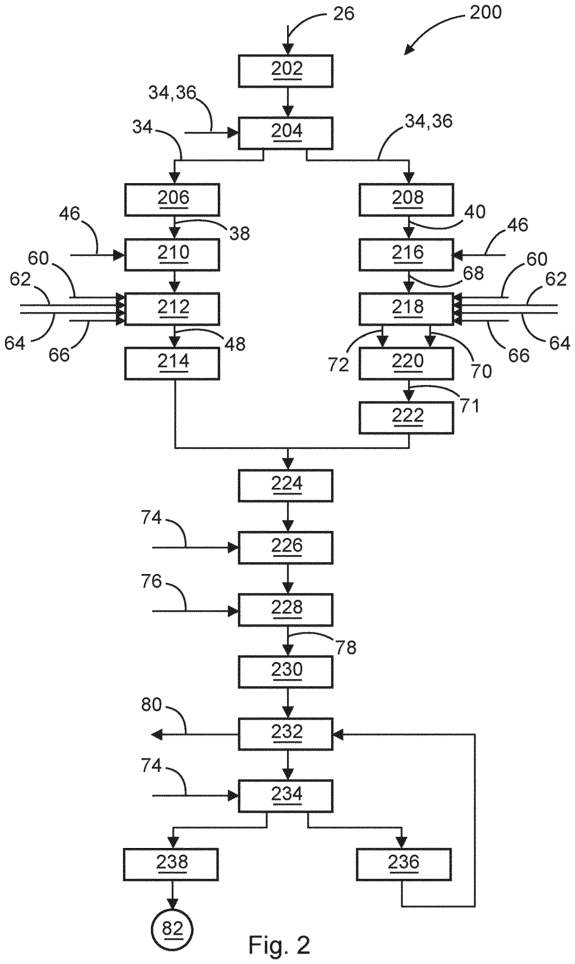

Fig. 2 zeigt die Schritte eines Verfahrens 200 gemäß einem ersten Ausführungsbeispiel. In einem Schritt 202 wird von einem Bedienelement 24 ein Parkbremsanforderungssignal 26 empfangen. Im Schritt 204 wird durch Empfangen von Signalen von Sensoren 32 für jeden der Bremsaktuatoren 14 geprüft, ob dieser eine fehlerfreie Funktion 34 oder eine fehlerbehaftete Funktion 36 aufweist. Im Fall, dass alle Bremsaktuatoren 14 eine fehlerfreie Funktion 34 aufweisen, wird im Schritt 206 ein erster Zustand 38 des Fahrzeugs 100 erfasst. Ist einer der Bremsaktuatoren 14 fehlerbehaftet, weist also eine fehlerbehaftete Funktion 36 auf, wird im Schritt 208 ein zweiter Zustand 40 des Fahrzeugs 100 mit der Überwachungsanordnung 30 erfasst.

Im Fall, dass der erste Zustand 38 erfasst wurde, wird im Schritt 210 für jeden der Bremsaktuatoren 14 ein für den jeweiligen Bremsaktuator 14 vorbestimmter Wert 48 aus einem Speicher 46 abgerufen. Im Schritt 212 wird ein Verschleiß 60 für jeden der Bremsaktuatoren 14, eine Alterung 62 für jeden der Bremsaktuatoren 14, ein Fahrzeugzustand 64 sowie mindestens eine Umweltbedingung 66 aus dem Speicher 46 oder weiteren Sensoren 32 des Fahrzeugs 100 abgerufen und der vordefinierte Wert 48 in Abhängigkeit vom Verschleiß 60, der Alterung 62, dem Fahrzeugzustand 64 und/oder der Umweltbedingung 66 angepasst. Daraufhin wird im Schritt 214 jeder der Bremsaktuatoren 14 mit dem so vorbestimmten Wert 48 als Sollbremskraftwert 22 angesteuert.

Wird demgegenüber ein zweiter Zustand 40 im Schritt 208 erfasst, wird im Schritt 216 zunächst ein Kompensationsbremskraftwert 68 in Abhängigkeit vom vorbestimmten Wert 48 des fehlerbehafteten der mehreren Bremsaktuatoren 14 oder in Abhängigkeit von der Summe der vorbestimmten Werte 48 jedes der fehlerbehafteten der mehreren Bremsaktuatoren 14 bestimmt. Der oder die vorbestimmten Werte werden vorzugsweise im Schritt 216 so berechnet, wie in den Schritten 210 und 212 oder entsprechen einem vorbestimmten Wert, der im Speicher 46 abgelegt ist.

Ferner wird im Schritt 218 mindestens ein Kompensationsbremskraftwertanteil 70 in Abhängigkeit vom Kompensationsbremskraftwert 68 bestimmt. Dieser Kompensationsbremskraftwertanteil 70 wird für jeden der fehlerfrei funktionierenden Bremsaktuatoren 14 außerdem in Abhängigkeit von einem Verschleiß 60 des jeweiligen Bremsaktuators 14, einer Alterung 62 des jeweiligen Bremsaktuators 14, einem Fahrzeugzustand 64 und/oder einer Umweltbedingung 66 des Fahrzeugs 100 bestimmt. Hierbei wird auch ein Verhältnis 72 der Kompensationswertanteile 70 in Abhängigkeit vom Verschleiß 60, der Alterung 62, einem Fahrzeugzustand 64 und einer Umweltbedingung 66 bestimmt. Im Schritt 220 wird dann für jeden der Bremsaktuatoren 14 mit fehlerfreier Funktion 34 eine Summe 71 bestimmt, die der Summe 71 aus dem für den Bremsaktuator 14 vorbestimmten Wert 48 und einem für den Bremsaktuator 14 bestimmten Kompensationswertanteil 70 entspricht. Die vorbestimmten Werte der funktionierenden Bremsaktuatoren 14 werden vorzugsweise ebenfalls wie in den Schritten 210 und 212 bestimmt. Jeder der Bremsaktuatoren 14 wird dann mit der Summe 71 im Schritt 222 als Sollbremskraftwert 22 angesteuert.

Wurden alle Bremsaktuatoren 14 im Schritt 222 oder 214 mit ihrem bestimmten Sollbremskraftwert 22 angesteuert, werden im Schritt 224 ein oder mehrere der Sollbremskraftwerte 22 reduziert, bis im Schritt 226 eine Fahrzeugbewegung 74 vom Bremssteuergerät 20 erfasst wird. Im Schritt 228 werden dann alle Sollbremskraftwerte 22, die zuvor reduziert wurden, um einen Sicherheitswert 76 erhöht, wobei der daraus resultierende Sollbremskraftwert 22 einem minimalen Sollbremskraftwert 78 entspricht, mit dem dann der jeweilige Bremsaktuator 14 im Schritt 230 angesteuert wird. Im Schritt 232 wird dann das Fahrzeug 100 temporär angetrieben 80 und im Schritt 234 geprüft, ob eine Fahrzeugbewegung 74 aus dem Antreiben erfolgt. Im Fall, dass eine Fahrzeugbewegung 74 erfolgt, werden im Schritt 236 die Sollbremskraftwerte 22 weiter erhöht und danach erneut Schritt 232 ausgeführt. Im Fall, dass keine Fahrzeugbewegung 74 resultiert, werden im Schritt 238 die Bremsaktuatoren 14 gesperrt, so dass eine Parkbremsfunktion 82 ausgeführt ist.

### Bezugszeichen (Teil der Beschreibung)

- 10: Bremssystem
- 12: Räder
- 14: Bremsaktuator
- 15: Schnittstellenmodul
- 16: Bremskraft
- 17: Datenbus
- 18: Bremseinrichtung
- 20: Bremssteuergerät
- 22: Sollbremskraftwert
- 23: Steuerlogik
- 24: Bedienelement
- 25: Hebel
- 26: Parkbremsanforderungssignal
- 27: Schalter
- 28: Blockieranforderung
- 28a: temporäre Blockieranforderung
- 28b: andauernde Blockieranforderung
- 29: Raddrehzahlsensor
- 30: Überwachungsanordnung
- 32: Sensoren
- 33: Größe
- 34: fehlerfreie Funktion
- 36: fehlerbehaftete Funktion
- 38: erster Zustand
- 40: zweiter Zustand
- 44: Raddrehzahl
- 46: Speicher
- 48: Werte
- 60: Verschleiß
- 62: Alterung
- 64: Fahrzeugzustand
- 66: Umweltbedingung
- 68: Kompensationsbremskraftwert
- 70: Kompensationsbremskraftwertanteil
- 72: Verhältnis
- 71: Summe
- 74: Fahrzeugbewegung
- 76: Sicherheitswert
- 78: minimaler Sollbremskraftwert
- 80: temporäres Antreiben
- 82: Parkbremsfunktion
- 100: Fahrzeug
- 102: Achse
- 104: Achse
- 106: Achse
- 108: Liftachse
- 200: Verfahren
- 202: Empfangen Parkbremsanforderungssignal
- 204: Überprüfen Funktion durch Empfangen von Signalen
- 206: Erfassen erster Zustand
- 208: Erfassen zweiter Zustand
- 210: Abrufen Wert
- 212: Abrufen Verschleiß, Alterung, Fahrzeugzustand, Umweltbedingung und Anpas-sen Wert
- 214: Ansteuern Bremsaktuatoren mit Sollbremskraftwert
- 216: Bestimmen Kompensationsbremskraftwert
- 218: Bestimmen Kompensationsbremskraftwertanteil
- 220: Bestimmen Summe
- 222: Ansteuern Bremsaktuatoren mit Sollbremskraftwert
- 224: Reduzieren Sollbremskraftwerte
- 226: Erfassen Fahrzeugbewegung
- 228: Erhöhen Sollbremskraftwerte um Sicherheitswert
- 230: Ansteuern der Bremsaktuatoren
- 232: temporäres Antreiben Fahrzeug
- 234: Prüfen, ob Fahrzeugbewegung erfolgt
- 236: Erhöhen Sollbremskraftwerte
- 238: Sperren Bremsaktuatoren

## Patentansprüche

1. Bremssystem (10) zum Ausführen einer Parkbremsfunktion (82) eines Fahrzeugs (100) mit:
- mehreren individuell ansteuerbaren, insbesondere elektromechanischen, Bremsaktuatoren (14), wobei jeder der Bremsaktuatoren (14) jeweils mindestens einem Rad (12) des Fahrzeugs (100) zugeordnet und eingerichtet ist, eine Bremskraft (16) zum Bremsen des zugeordneten Rades (12) in Abhängigkeit von einem dem Bremsaktuator (14) zugeordneten Sollbremskraftwert (22) zu erzeugen,
- einer Überwachungsanordnung (30), die eingerichtet ist, mindestens einen ersten Zustand (38) und einen zweiten Zustand (40) des Fahrzeugs zu erfassen,
- einem Bremssteuergerät (20), das eingerichtet ist, ein Parkbremsanforderungssignal (26), das vorzugsweise eine Blockieranforderung (28) mehrerer oder aller Räder (12) des Fahrzeugs (100) anzeigt, zu empfangen und nach dem Empfangen des Parkbremsanforderungssignals (26),
a) im Fall eines mit der Überwachungsanordnung (30) erfassten ersten Zustands (38) jeden der Bremsaktuatoren (14) jeweils mit einem für den jeweiligen Bremsaktuator (14) vorbestimmten Wert (48) als Sollbremskraftwert (22) anzusteuern und
b) im Fall eines mit der Überwachungsanordnung (30) erfassten zweiten Zustands (40) wenigstens einen der Bremsaktuatoren (14) mit einem Sollbremskraftwert (22) anzusteuern, der einer Summe (72) aus dem für den einen Bremsaktuator (14) vorbestimmten Wert (48) und einem für den einen Bremsaktuator (14) bestimmten Kompensationswertanteil (70) entspricht.

2. Bremssystem (10) nach Anspruch 1, wobei die Überwachungsanordnung (30) eingerichtet ist jeden oder mehrere der Bremsaktuatoren (14) zu überwachen und, eine fehlerfreie Funktion (34) oder eine fehlerbehaftete Funktion (36) der überwachten Bremsaktuatoren (14) zu erfassen, wobei die Überwachungsanordnung (30) eingerichtet ist, den ersten Zustand (38) bei einer erfassten fehlerfreien Funktion (34) aller der mehreren überwachten Bremsaktuatoren (14) und den zweiten Zustand (40) bei einer erfassten fehlerbehafteten Funktion (36) mindestens eines der mehreren überwachten Bremsaktuatoren (14) zu erfassen.

3. Bremssystem (10) nach Anspruch 2, wobei das Bremssteuergerät (20) im Fall eines erfassten zweiten Zustands (40) eingerichtet ist:
- einen Kompensationsbremskraftwert (68) in Abhängigkeit von dem vordefinierten Wert des Bremsaktuators mit fehlerbehafteter Funktion (36) der mehreren Bremsaktuatoren (14) oder in Abhängigkeit von der Summer der vordefinierten Werte jedes der Bremsaktuatoren mit fehlerbehafteter Funktion (36) der mehreren Bremsaktuatoren (14) zu bestimmen,
- für jeden der Bremsaktuators mit fehlerfreier Funktion (34) der mehreren Bremsaktuatoren (14) jeweils einen Kompensationsbremskraftwertanteil (70) in Abhängigkeit vom Kompensationsbremskraftwert (68) zu bestimmen und
- jeden der Bremsaktuators mit fehlerfreier Funktion (34) der mehreren Bremsaktuatoren (14) jeweils mit einem Sollbremskraftwert (22) anzusteuern, der einer Summe aus dem für den Bremsaktuator (14) vordefinierten Wert und dem für den Bremsaktuator (14) bestimmten Kompensationswertanteil (70) entspricht.

4. Bremssystem (10) nach Anspruch 2 oder 3, wobei die Überwachungsanordnung (30) für mehrere oder jeden der Bremsaktuatoren (14) jeweils
- einen Sensor (32) umfasst, um mit dem Sensor (32) eine fehlerfreie Funktion (34) oder eine fehlerbehaftete Funktion (36) des dem Sensor (32) zugeordneten Bremsaktuators (14) zu erfassen und/oder
- eine elektrische Größe (33) zum Ansteuern des jeweiligen Bremsaktuators (14) überwacht, um in Abhängigkeit von einem Verlauf der elektrischen Größe (33) eine fehlerfreie Funktion (34) oder eine fehlerbehaftete Funktion (36) des dem Verlauf zugeordneten Bremsaktuators (14) zu erfassen.

5. Bremssystem (10) nach Anspruch 1, wobei das Parkbremsanforderungssignal (26) eine temporäre oder andauernde Blockieranforderung (28b) umfasst und
die Überwachungsanordnung (30) eingerichtet ist, das Parkbremsanforderungssignal (26) zu empfangen und im Fall einer temporären Blockieranforderung (28a) den ersten Zustand (38) und im Fall einer andauernden Blockieranforderung (28b) den zweiten Zustand (40) zu erfassen,
wobei vorzugsweise das Bremssteuergerät (20) nach Empfang des Parkbremsanforderungssignals (26) eingerichtet ist, im Fall eines mit der Überwachungsanordnung (30) erfassten zweiten Zustands (40) mehrere oder bevorzugt alle der mehreren Bremsaktuatoren (14) jeweils mit einem Sollbremskraftwert (22) anzusteuern, der einer Summe aus dem für den jeweiligen Bremsaktuator (14) vorbestimmten Wert (48) und einem für den jeweiligen Bremsaktuator (14) bestimmten Kompensationswertanteil (70) entspricht.

6. Bremssystem (10) nach einem der vorhergehenden Ansprüche, wobei der vorbestimmte Wert (48) für die mehreren Bremsaktuatoren (14) jeweils durch Abrufen aus einem Speicher (46), in dem der jeweilige Wert (48) vordefiniert ist, vorbestimmt wird und/oder in Abhängigkeit von einem Verschleiß (60) des jeweiligen Bremsaktuators (14), einer Alterung (62) des jeweiligen Bremsaktuators (14), einem Fahrzeugzustand (64) oder einer Umweltbedingung (66) des Fahrzeugs (100) vorbestimmt wird.

7. Bremssystem (10) nach einem der vorhergehenden Ansprüche, wobei das Bremssteuergerät (20) eingerichtet ist, den Kompensationswertanteil (70) für einen oder mehrere der mehreren Bremsaktuatoren (14) in Abhängigkeit von einem Verschleiß (60) des Bremsaktuators (14), einer Alterung (62) des Bremsaktuators (14), einem Fahrzeugzustand (64) oder einer Umweltbedingung (66) des Fahrzeugs (100) und/oder ein Verhältnis (72) der Kompensationswertanteile (70) zueinander in Abhängigkeit von Verschleiß (60) mehrere oder jedes der mehreren Bremsaktuatoren (14), Alterungen (62) mehrere oder jedes der mehreren Bremsaktuatoren (14), einem Fahrzeugzustand (64) oder einer Umweltbedingung (66) des Fahrzeugs (100) zu bestimmen.

8. Bremssystem (10) nach Anspruch 6 oder 7, wobei das Bremssteuergerät (20) eingerichtet ist, einen Verschleiß (60) und/oder eine Alterung (62) jedes oder mehrerer der mehreren Bremsaktuatoren (14), vorzugsweise durch Überwachen der Betätigungen des jeweiligen Bremsaktuators (14), zu bestimmen.

9. Bremssystem (10) nach einem der vorhergehenden Ansprüche, wobei das Bremssystem (10) eine Anzeige umfasst und eingerichtet ist, im Fall eines mit der Überwachungsanordnung (30) erfassten zweiten Zustands (40), den zweiten Zustand (40) mit der Anzeige für einen Fahrer anzuzeigen.

10. Bremssystem (10) nach einem der vorhergehenden Ansprüche, wobei das Bremssteuergerät (20) eingerichtet ist, nach dem Empfangen des Parkbremsanforderungssignals (26) im Fall eines mit der Überwachungsanordnung (30) erfassten zweiten Zustands (40) eine Liftachse (108) des Fahrzeugs (100) anzusteuern, um die Liftachse (108) abzusenken und mindestens einen Bremsaktuator (14) mindestens eines der Räder der Liftachse (108) mit einem Sollbremskraftwert (22) anzusteuern, der vorzugsweise einer Summe aus dem für den Bremsaktuator (14) der Liftachse (108) vorbestimmten Wert und einem für den Bremsaktuator (14) der Liftachse (108) bestimmten Kompensationswertanteil (70) entspricht.

11. Bremssystem (10) nach einem der vorhergehenden Ansprüche, wobei das Bremssteuergerät (20) eingerichtet ist, minimale Sollbremskraftwerte (22) nach dem Empfangen des Parkbremsanforderungssignals (26) zu ermitteln durch:
- Ansteuern mehrerer oder aller der Bremsaktuatoren (14) jeweils mit dem im Bremssteuergerät (20) bestimmten Sollbremskraftwert (22),
- Reduzieren mehrerer oder aller Sollbremskraftwerte (22), bis eine Fahrzeugbewegung (74) vom Bremssteuergerät (20) detektiert wird,
- Erhöhen aller Sollbremskraftwerte (22) um einen Sicherheitswert (76), wobei die um den Sicherheitswert (76) erhöhten Sollbremskraftwerte (22) den minimalen Sollbremskraftwerten (22) entsprechen,
- vorzugsweise Prüfen der minimalen Sollbremskraftwert (22) durch temporäres Antreiben (80) des Fahrzeugs (100) und Prüfen, ob eine Fahrzeugbewegung (74) aus dem Antreiben (80) resultiert.

12. Bremssystem (10) nach einem der vorhergehenden Ansprüche, wobei das Bremssteuergerät (20) eingerichtet ist, nach dem Ansteuern der Bremsaktuatoren (14) mit dem jeweiligen Sollbremskraftwert (22) oder minimalen Sollbremskraftwert (22) alle Bremsaktuatoren (14) mechanisch zu sperren, um eine Bewegung des jeweiligen Bremsaktuators (14) zu verhindern.

13. Fahrzeug (100) mit einem Bremssystem (10) nach einem der vorhergehenden Ansprüche und vorzugsweise einem Hebel (25) oder Schalter (27) zum Aktivieren und Deaktivieren einer Parkbremsfunktion (82), wobei im Fall einer Aktivierung einer Parkbremsfunktion (82) ein Parkbremsanforderungssignal (26) erzeugt und an ein Bremssteuergerät (20) vom Hebel (25) oder Schalter (27) gesendet wird.

14. Verfahren (200) zum Ausführen einer Parkbremsfunktion (82) eines Bremssystems (10) nach einem der Ansprüche 1 bis 13 durch Betreiben des Bremssteuergeräts (20).

15. Verfahren (200) nach Anspruch 14, wobei das Verfahren (200) umfasst:
- Empfangen eines Parkbremsanforderungssignals (26) mit einem Bremssteuergerät (20) des Bremssystems (10),
- Erfassen eines Zustands (38, 40) des Fahrzeugs (100) mit einer Überwachungsanordnung (30) und
- Ansteuern von Bremsaktuatoren (14) des Fahrzeugs (100) mit Sollbremskraftwerten (22), die in Abhängigkeit vom erfassten Zustand (38, 40) des Fahrzeugs (100) bestimmt werden.
